# FASCICULE DE BREVET EUROPEEN

(11) **EP 1 709 717 B1**
(45) Date de publication et mention de la délivrance du brevet: **16.04.2014**
(21) Numéro de dépôt: 04816472.7
(22) Date de dépôt: 22.12.2004
(51) Int. Cl.: H01T 2/02, H02H 9/06

(54) **DISPOSITIF DE PROTECTION CONTRE LES SURTENSIONS AVEC ECLATEURS EN PARALLELE A DECLENCHEMENT SIMULTANE**
.
DEVICE FOR PROTECTION AGAINST VOLTAGE SURGES WITH PARALLEL SIMULTANEOUSLY TRIGGERED SPARK-GAPS

(30) Priorité: 30.12.2003 FR 0315551
(43) Date de publication de la demande: 11.10.2006
(73) Titulaire: ABB France, 91978 Courtaboeuf Cedex (FR)
(72) Inventeur: CREVENAT, Vincent, André, Lucien, F-65250 Izeaux (FR); GAUTIER, Boris, F-65100 Lourdes (FR)
(74) Mandataire: Hirsch & Associés
(86) Numéro de dépôt international: PCT/FR2004/003345
(87) Numéro de publication internationale: WO 2005/074083

(56) Documents cités:
- EP-A- 1 102 371
- WO-A-03/056670
- DE-A- 10 211 795
- US-A- 4 280 098

## Description

### DOMAINE TECHNIQUE

La présente invention se rapporte au domaine technique général des dispositifs de protection d'installations électriques contre les surtensions, notamment les surtensions transitoires dues à la foudre.

L'invention concerne plus particulièrement un dispositif de protection contre les surtensions, du genre parafoudre à éclateur, comportant :
- un premier éclateur,
- un premier système de pré-déclenchement, relié électriquement au premier éclateur, de manière à permettre l'amorçage de ce dernier,
- un dispositif de commande, relié électriquement au premier système de pré-déclenchement de manière à l'activer.

### TECHNIQUE ANTERIEURE

Les dispositifs de protection d'installations électriques contre les surtensions sont largement utilisés, et peuvent être communément désignés sous l'appellation « *parafoudres* ». Ils ont en effet pour but essentiel d'écouler à la terre des courants de foudre, et éventuellement d'écrêter les tensions additionnelles induites par ces courants à des niveaux compatibles avec la tenue des équipements et appareils auxquels ils sont raccordés.

Il est déjà connu d'utiliser un parafoudre à éclateur pour protéger une installation contre les surtensions. L'éclateur est alors disposé entre là phase à protéger et la terre, de manière à permettre, en cas de surtensions, l'écoulement du courant de foudre à la terre.

Un éclateur est un dispositif bien connu comprenant deux électrodes placées en vis-à-vis et séparées par un milieu diélectrique. L'une des électrodes est reliée électriquement à la phase à protéger, tandis que l'autre électrode est reliée électriquement à la terre. Lorsqu'une surtension, générée par l'arrivée d'un courant de foudre, atteint une valeur seuil dite de déclenchement, l'éclateur s'amorce, et un arc électrique se forme entre les électrodes, créant alors un court-circuit entre la phase et la terre. Le courant de foudre s'écoule alors de la phase vers la terre, et l'installation électrique est préservée.

L'arc électrique ne s'éteint pas spontanément et continue ainsi d'écouler un courant de court-circuit, appelé courant de suite. Ce courant de suite doit de préférence être coupé sans provoquer l'ouverture des dispositifs de coupure générale de l'installation, du genre disjoncteurs, de manière à éviter la mise hors tension de l'installation.

Les parafoudres à éclateur comportent souvent un unique éclateur, associé à un système de pré-déclenchement (électrode de déclenchement), ainsi qu'un dispositif de commande, sensible à la tension, relié électriquement au système de pré-déclenchement de manière à l'activer.

De tels dispositifs à éclateur unique, bien qu'intéressants en raison de leur conception particulièrement simple, présentent cependant plusieurs inconvénients, liés notamment à leur capacité limitée d'écoulement du courant de foudre d'une part, et de coupure du courant de suite d'autre part.

Pour pallier ces inconvénients, il est connu de monter deux ou plusieurs éclateurs en parallèle, afin de mieux répartir le courant de foudre et le courant de suite entre les éclateurs montés en parallèle, ce qui permet d'améliorer la capacité globale d'écoulement du courant de foudre et de coupure du courant de suite du parafoudre.

De tels parafoudres, à éclateurs en parallèle, reposent généralement sur le concept suivant.

Deux éclateurs sont montés en parallèle et l'on place, en série avec chacun d'entre eux, une bobine d'inductance. Ainsi, lorsque l'un des deux éclateurs s'amorce, le courant s'écoulant à travers la bobine d'inductance disposée en série crée une tension aux bornes de cette dernière, cette tension se retrouvant aux bornes du second éclateur, ce qui provoque son amorçage.

De tels dispositifs de protection, bien qu'offrant une meilleure protection que les dispositifs à éclateur unique, souffrent cependant de plusieurs inconvénients.

Tout d'abord, lorsque le courant traversant le premier éclateur est inférieur à une valeur pré-déterminée, la tension générée aux bornes de la bobine d'inductance est insuffisante pour amorcer le second éclateur. Dans cette situation, il n'y a donc pas de répartition du courant entre les deux éclateurs, de telle sorte que la capacité d'écoulement du courant de foudre du dispositif correspond sensiblement à la capacité d'écoulement du courant de foudre du seul premier éclateur.

A l'inverse, lorsque l'intensité du courant traversant le premier éclateur est élevée, la tension aux bornes de la bobine d'inductance devient importante et s'ajoute à la tension aux bornes de l'éclateur, dégradant ainsi la qualité de l'écrêtage réalisé par ce dernier et donc le niveau de protection offert par l'éclateur.

On voit ainsi tout l'intérêt de réaliser un dispositif de protection contre les surtensions qui, tout en relevant d'une conception simple et économique, présente des capacités d'écoulement du courant de foudre et de coupure du courant de suite améliorées.

### EXPOSE DE L'INVENTION

Les objets assignés à l'invention visent en conséquence à porter remède aux différents inconvénients énumérés précédemment et à proposer un nouveau dispositif de protection contre les surtensions présentant des caractéristiques améliorées du point de vue de sa capacité d'écoulement du courant de foudre d'une part, et de sa capacité de coupure du courant de suite d'autre part.

Un autre objet de l'invention vise à proposer un nouveau dispositif de protection contre les surtensions présentant un très bon niveau de protection.

Un autre objet de l'invention vise à protéger un nouveau dispositif de protection contre les surtensions dont la conception est particulièrement simple.

Un autre objet de l'invention vise à proposer un nouveau dispositif de protection contre les surtensions mettant en oeuvre des composants électriques standards.

Les objets assignés à l'invention sont atteints à l'aide d'un dispositif de protection contre les surtensions, du genre parafoudre à éclateur, comportant :
- un premier éclateur,
- un premier système de pré-déclenchement, relié électriquement au premier éclateur, de manière à permettre l'amorçage de ce dernier,
- un dispositif de commande, relié électriquement au premier système de pré-déclenchement de manière à l'activer,
caractérisé en ce qu'il comporte au moins un deuxième éclateur, monté en parallèle avec le premier éclateur, et relié électriquement à un deuxième système de pré-déclenchement, monté en parallèle avec le premier système de pré-déclenchement, de telle sorte que le dispositif de commande active simultanément le premier et le deuxième systèmes de pré-déclenchement, de manière à déclencher simultanément le premier et le deuxième éclateurs.

### DESCRIPTIF SOMMAIRE DES DESSINS

D'autres particularités et avantages de l'invention apparaîtront et ressortiront plus en détails à la lecture de la description faite ci-après, en référence aux dessins annexés, donnés à titre purement illustratif et non limitatif, dans lesquels :
- La figure 1 illustre un schéma électrique de principe du dispositif de protection contre les surtensions conforme à l'invention, destiné à être raccordé électriquement à une installation électrique.
- La figure 2 illustre un schéma électrique détaillé d'un mode de réalisation du dispositif de protection contre les surtensions conforme à l'invention, destiné à être raccordé à une installation électrique.
- La figure 3 illustre un schéma électrique détaillé d'un autre mode de réalisation du dispositif de protection contre les surtensions conforme à l'invention.
- La figure 4 illustre un schéma électrique détaillé d'encore un autre mode de réalisation du dispositif de protection contre les surtensions conforme à l'invention.

### MEILLEURE MANIERE DE REALISER L'INVENTION

Le dispositif de protection 1 contre les surtensions conforme à l'invention est destiné à être branché en dérivation sur l'équipement ou l'installation électrique à protéger.

L'expression « *installation électrique »* fait référence à tout type d'appareil ou réseau susceptible de subir des perturbations de tension, notamment des surtensions transitoires dues à la foudre.

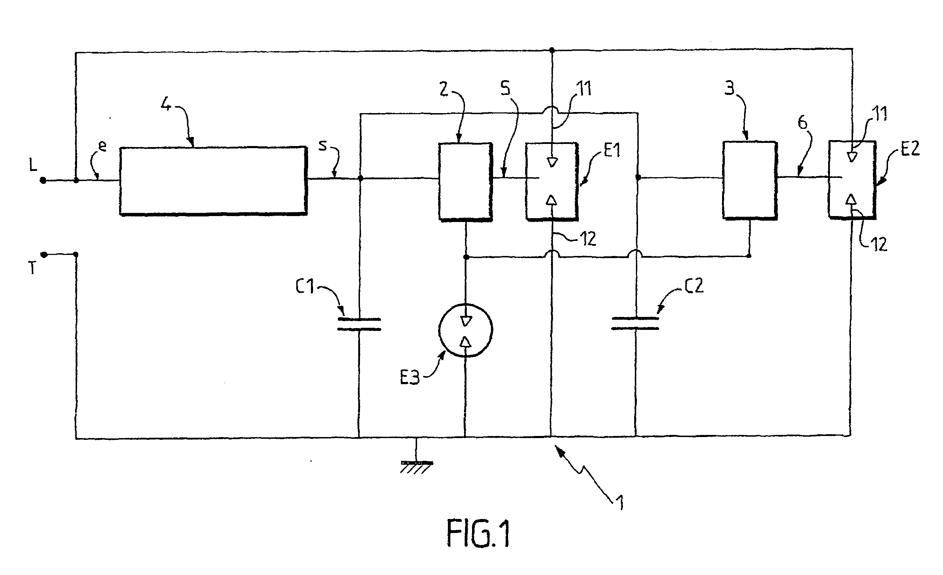

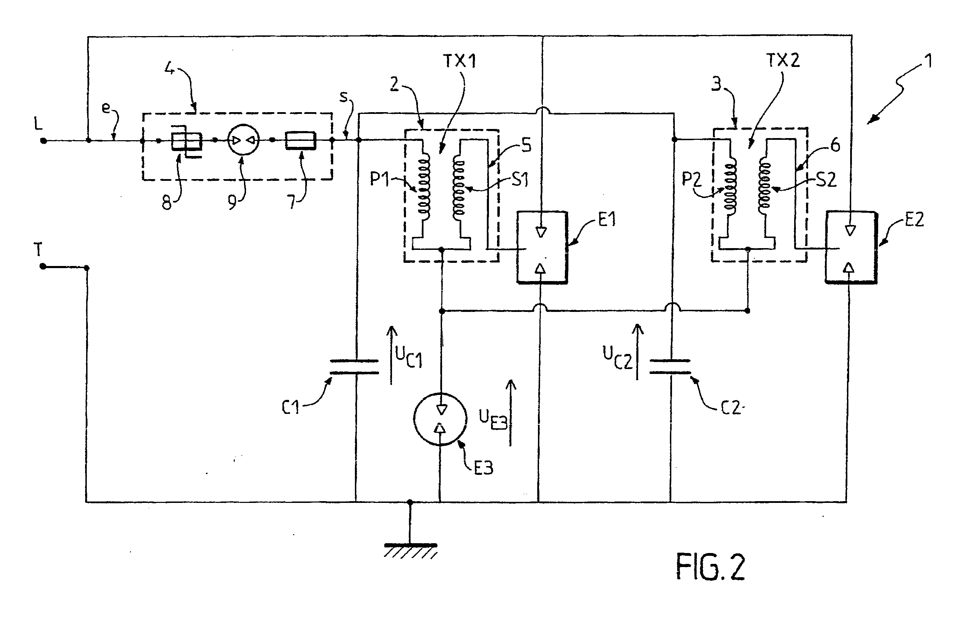

Ce dispositif va être décrit en s'appuyant sur les figures 1 et 2.

Le dispositif de protection 1 contre les surtensions est avantageusement destiné à être disposé entre une phase L de l'installation à protéger, et la terre T.

Il est par ailleurs envisageable, sans pour autant sortir du cadre de l'invention, que le dispositif, au lieu d'être branché en dérivation entre une phase L et la terre T, soit branché entre le neutre et la terre, entre la phase L et le neutre ou encore entre deux phases (cas d'une protection différentielle). Dans tous les cas, le dispositif de protection 1 conforme à l'invention constitue avantageusement un dispositif de protection unipolaire.

Pour des besoins purement illustratifs et descriptifs, nous considérerons dans la suite que le dispositif de protection 1 est branché entre la phase L à protéger et la terre T.

Ce dispositif, du genre parafoudre à éclateurs, comporte ainsi, selon l'invention, un premier éclateur E1, ainsi qu'un premier système de pré-déclenchement 2 relié électriquement au premier éclateur E1, de manière à permettre l'amorçage de ce dernier.

Le dispositif de protection 1 selon l'invention comporte également un dispositif de commande 4, relié électriquement au premier système de pré-déclenchement 2, et disposé préférentiellement en amont de ce dernier, de manière à l'activer.

Selon l'invention, le dispositif de protection 1 comporte également au moins un deuxième éclateur E2, lequel est monté en parallèle (ou dérivation) avec le premier éclateur E1. Le deuxième éclateur E2 est relié électriquement à un deuxième système de pré-déclenchement 3 monté en parallèle avec le premier système de pré-déclenchement 2 et donc également relié électriquement au dispositif de commande 4 de manière à pouvoir être simultanément activé par ce dernier.

De cette façon, le dispositif de commande 4 active simultanément le premier et le deuxième systèmes de pré-déclenchement 2, 3, de manière à déclencher simultanément le premier et le deuxième éclateurs E1, E2.

Ainsi, le dispositif de protection 1 permet, grâce au déclenchement simultané des premier et deuxième éclateurs E1, E2, dits *«* éclateurs *principaux »,* montés en parallèle, de répartir le courant de foudre entre les deux éclateurs E1, E2 principaux, ce qui permet d'améliorer la capacité d'écoulement du courant de foudre du dispositif.

Au sens de l'invention, l'expression *« en parallèle »* signifie que les éclateurs E1, E2 sont soumis à la même tension. Ainsi, lorsqu'ils deviennent passants, les éclateurs E1, E2 se comportent comme des dipôles passifs montés en parallèle, dont les bornes de même signe sont soumises au même potentiel.

De la même façon, les systèmes de pré-déclenchement 2, 3, montés en parallèle, sont soumis à la même tension lorsqu'ils sont traversés par un courant.

Une telle conception permet également d'améliorer la capacité de coupure du courant de suite du dispositif de protection 1, dans la mesure où chacun des éclateurs E1, E2 principaux, ne « *voit »* que la moitié de l'intensité totale du courant de suite, facilitant ainsi la coupure de ce dernier par les moyens d'extinction d'arcs dont est pourvu chacun des éclateurs E1, E2.

Il est bien évidemment envisageable, pour améliorer encore davantage les capacités du dispositif de protection 1, de monter plus de deux éclateurs en parallèle, par exemple trois, quatre, voire davantage, et ce, sans sortir du cadre de l'invention.

Dans la suite, on considérera que seuls deux éclateurs principaux sont montés en parallèle, les caractéristiques relatives au dispositif de protection 1 à deux éclateurs pouvant alors être transposées de façon évidente à un dispositif comprenant un nombre plus élevé d'éclateurs en parallèle.

Les éclateurs mis en oeuvre dans le cadre de l'invention pourront être de tout type connu de l'homme du métier, et par exemple être constitués par des éclateurs à air ou à gaz.

Les éclateurs E1, E2 sont préférentiellement des éclateurs à gaz, et encore plus préférentiellement des éclateurs à air. Ils présentent des caractéristiques, et notamment des tensions de seuil de déclenchement, sensiblement identiques, de manière d'une part à être amorcés simultanément et d'autre part à présenter des capacités d'écoulements du courant de foudre équivalentes. Ainsi, lorsqu'ils deviennent passants, les éclateurs E1, E2 écoulent sensiblement le même courant, correspondant sensiblement à la moitié de la totalité du courant écoulé par le dispositif de protection 1.

De façon classique, les éclateurs E1, E2 principaux comportent une première électrode principale 11, reliée électriquement à la phase L à protéger, ainsi qu'une deuxième électrode 12 principale, reliée électriquement à la terre T (figure 1).

Au sens de l'invention, l'expression « *en parallèle »* fait donc référence au fait que la tension appliquée entre les électrodes principales 11, 12 des éclateurs montés en parallèle est sensiblement la même.

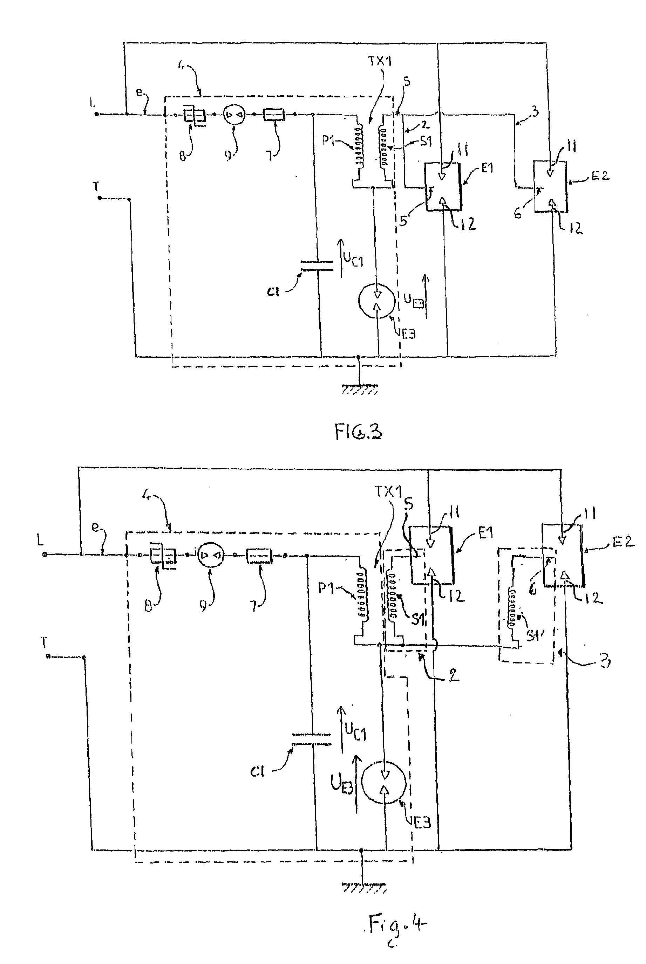

Plusieurs modes de réalisation de l'invention vont maintenant être décrits en se référant aux figures 2 et 3.

Selon un premier mode de réalisation de l'invention, illustré sur la figure 2, chaque système de pré-déclenchement 2, 3 est avantageusement formé par un système électronique qui comporte une électrode de déclenchement 5, 6, ainsi qu'un transformateur TX1, TX2.

Les électrodes de déclenchement 5, 6 sont de type classique, et permettent notamment l'ionisation du gaz ou de l'air contenu dans la chambre de l'éclateur, ce qui a pour effet de conduire à la formation d'un arc électrique entre les électrodes principales 11, 12 de l'éclateur, ce dernier devenant alors passant.

De façon particulièrement avantageuse, chaque électrode de déclenchement 5, 6 est reliée électriquement au circuit secondaire S1, S2 du transformateur TX1, TX2 associé.

Selon une variante de l'invention, non représentée aux figures, le circuit secondaire S1, S2 du transformateur TX1, TX2 est directement relié à l'électrode principale 11 de l'éclateur E1, E2, de manière à assurer le déclenchement de ce dernier. Selon cette variante, le système de pré-déclenchement 2, 3 n'est alors pas pourvu d'une électrode de déclenchement 5, 6 supplémentaire, et est formé par un système électronique qui comporte un transformateur TX1, TX2 et une électrode principale 11 de l'éclateur E1, E2, ladite électrode principale 11 formant alors l'électrode de déclenchement.

Tel que cela est représenté sur la figure 2, les circuits primaires P1, P2 des transformateurs TX1, TX2 correspondant respectivement au premier et au deuxième systèmes de pré-déclenchement 2, 3 sont avantageusement montés en parallèle.

En outre, les circuits primaires P1, P2 des transformateurs TX1, TX2 sont chacun reliés électriquement à la sortie s du dispositif de commande 4.

Grâce à ce montage particulier, le dispositif de commande 4 va pouvoir activer simultanément les deux électrodes de déclenchement 5, 6, lesquelles vont pouvoir à leur tour amorcer en même temps les éclateurs E1, E2 principaux.

Le dispositif de commande 4 est avantageusement sensible à la tension, et peut être par exemple composé de fusibles 7, de varistances 8 et d'éclateurs 9.

Un tel dispositif sensible à la tension est bien connu de l'homme du métier et peut également être réalisé à l'aide d'autres composants non linéaires, par exemple des diodes d'écrêtage.

De manière préférentielle, on associera en série plusieurs composants, par exemple un éclateur 9 et une varistance 8, afin de bénéficier des avantages des deux technologies.

L'entrée e du dispositif de commande 4 est avantageusement reliée électriquement à la phase L à protéger.

En fonctionnement normal, l'impédance du dispositif de commande 4 est telle qu'elle empêche le courant de passer de la phase L vers le dispositif de protection 1, isolant ainsi ce dernier.

En revanche; lorsqu'une surtension se produit, le dispositif de commande 4 est susceptible de passer d'un état de très haute impédance à un état de quasi court-circuit, autorisant ainsi le passage du courant dans le dispositif de protection 1.

Avantageusement, le circuit primaire P1, P2 de chaque transformateur TX1, TX2 est relié électriquement à un condensateur C1, C2, dont la charge est commandée par le dispositif de commande 4.

De manière particulièrement avantageuse, le dispositif de protection 1 comporte un troisième éclateur E3, monté en parallèle avec le condensateur C1, C2.

De cette façon, lorsque la tension aux bornes du condensateur C1, C2 atteint la valeur-seuil de déclenchement du troisième éclateur E3, ce dernier court-circuite le condensateur C1, C2 qui se décharge alors dans le circuit primaire P1, P2 du transformateur TX1, TX2.

Selon une première variante de réalisation, le dispositif de protection 1 peut comprendre un seul condensateur C1 avantageusement disposé entre la sortie s du dispositif de commande 4 et la terre T. Le troisième éclateur E3 est alors monté en parallèle avec le condensateur C1 et relié électriquement au circuit primaire P1, P2 de chacun des transformateurs TX1, TX2 montés en parallèle.

Selon une variante préférentielle de l'invention, le dispositif de protection 1 comporte un premier condensateur C1 et un deuxième condensateur C2, le deuxième condensateur C2 étant monté en parallèle avec le premier condensateur C1, et les deux condensateurs C1, C2 étant également montés en parallèle avec le troisième éclateur E3.

Selon cette variante, le premier et le deuxième condensateurs C1, C2 sont chacun reliés électriquement au circuit primaire P1, P2 d'un transformateur TX1, TX2 associé. Ainsi, le premier condensateur C1 pourra être relié au circuit primaire P1 du transformateur TX1, le condensateur C2 étant alors relié au circuit primaire P2 du transformateur TX2 (figure 2).

Selon un deuxième mode de réalisation de l'invention, illustré sur la figure 3, chaque système de pré-déclenchement 2, 3 est formé par une électrode de déclenchement 5, 6 des éclateurs E1, E2. Dans ce cas, le dispositif de commande 4 comporte avantageusement un transformateur TX1 dont le circuit secondaire S1 est raccordé à chaque système de pré-déclenchement 2, 3, c'est-à-dire à chaque électrode de déclenchement 5, 6. Il est bien évidemment envisageable, sans sortir du cadre de l'invention, que le circuit secondaire S1 du transformateur TX1 soit directement relié à l'une des électrodes principales 11 des éclateurs E1, E2 montés en parallèle.

Selon cette variante non représentée aux figures, l'électrode principale 11 forme alors le système de pré-déclenchement de l'éclateur E1, E2 associé.

Grâce à ce montage particulier, le dispositif de commande 4 peut activer simultanément les deux électrodes de déclenchement 5, 6, susceptibles d'amorcer à leur tour en même temps les éclateurs E1, E2 principaux.

Selon ce mode de réalisation, la sortie s du dispositif de commande 4 correspond avantageusement à la sortie du circuit secondaire S1 du transformateur TX1. Le dispositif de protection 1, et plus précisément le dispositif de commande 4 comporte avantageusement un condensateur C1 relié électriquement au primaire P1 du transformateur TX1. Le dispositif de protection 1, et notamment le dispositif de commande 4 comprend en outre de préférence un troisième éclateur E3, monté en parallèle avec le condensateur C1.

De la même façon que dans le premier mode réalisation décrit, lorsque la tension aux bornes du condensateur C1 atteint la valeur seuil de déclenchement du troisième éclateur E3, ce dernier court-circuite le condensateur C1, qui se décharge alors dans le circuit primaire P1 du transformateur TX1.

Les électrodes de déclenchement 2, 3, chacune reliées à la sortie s du dispositif de commande 4, plus précisément à la sortie du circuit secondaire S1, et donc soumises simultanément au même potentiel, permettent donc d'amorcer en même temps les deux éclateurs E1, E2 principaux.

Selon un troisième mode de réalisation de l'invention illustré sur la figure 4, chaque système de pré-déclenchement 2, 3 est formé par un système qui comporte une électrode de déclenchement 5, 6 pour chacun des éclateurs E1, E2 ainsi qu'un circuit secondaire S1, S1' d'un transformateur TX1.

Selon cette variante, le transformateur TX1 comporte un circuit primaire P1 et deux circuits secondaires S1, S1' reliés respectivement à chaque électrode de déclenchement 5, 6.

Le circuit primaire P1 du transformateur TX1 fait avantageusement partie du dispositif de commande 4 qui comporte en outre le condensateur C1 et le troisième éclateur E3. De cette façon, lorsque la tension aux bornes du condensateur C1 atteint la valeur seuil de déclenchement du troisième éclateur E3, ce dernier court-circuite le condensateur C1 qui se décharge alors dans le circuit primaire P1 du transformateur TX1.

Les circuits secondaires S1, S1' du transformateur TX1 étant avantageusement montés en parallèle et de préférence formés par des bobinages identiques, la tension identique générée à leurs bornes a pour effet d'activer simultanément les électrodes de déclenchement 5, 6, amorçant ainsi en même temps les éclateurs E1, E2 principaux.

Selon une variante de réalisation, non représentée aux figures, la sortie des circuits secondaires S1, S1' du transformateur TX1 est directement raccordée à l'une des électrodes principales 11 des éclateurs E1, E2 de manière à assurer l'amorçage simultané de ces derniers. Selon cette variante, les éclateurs E1, E2 ne comportent pas d'électrodes de déclenchement 5, 6 et les systèmes de pré-déclenchement 2, 3 sont chacun formés par un système comprenant un circuit secondaire S1, S1' du transformateur TX1 et une électrode principale 11 de l'éclateur E1, E2.

Le dispositif de protection 1 selon l'invention permet ainsi, en déclenchant simultanément deux éclateurs E1, E2 principaux montés en parallèle, d'améliorer considérablement la capacité d'écoulement du courant de foudre et de coupure du courant de suite du parafoudre.

Le fonctionnement du dispositif de protection 1 conforme à l'invention va maintenant être décrit en se reportant aux figures 1, 2, 3 et 4.

Le dispositif de protection 1 unipolaire selon l'invention est branché en dérivation entre la phase L d'une installation électrique à protéger et la terre T, de telle sorte qu'il puisse écouler un éventuel courant de foudre vers la terre.

En fonctionnement normal, c'est-à-dire lorsque aucune surtension n'est présente dans la ligne de phase L, le dispositif de protection 1 est isolé de l'installation électrique grâce au dispositif de commande 4 qui offre alors une très haute impédance.

Si, au contraire, une surtension, notamment une surtension d'origine transitoire, survient dans la phase L et que l'amplitude de cette surtension suffit à déclencher le dispositif de commande 4 sensible à la tension, notamment un éclateur 9 disposé au sein de ce dispositif, le dispositif de commande 4 devient alors passant et autorise le passage du courant de la phase L vers le dispositif de protection 1, permettant ainsi le chargement du condensateur C1 ou le chargement sensiblement simultané des condensateurs C1, C2 montés en parallèle.

Le troisième éclateur E3 étant monté en parallèle avec le premier condensateur C1, la tension aux bornes dudit troisième éclateur E3, notée U_{E3}, est sensiblement égale à la tension U_{C1} aux bornes du condensateur C1. De même, dans le cas du premier mode de réalisation illustré sur la figure 1, la tension aux bornes du deuxième condensateur C2, notée U_{C2}, est sensiblement égale à la tension U_{E3} aux bornes du troisième éclateur E3. Ainsi, lorsque la tension U_{C1}. respectivement U_{C2}, atteint la valeur-seuil de déclenchement du troisième éclateur E3, un phénomène d'avalanche se produit au sein de ce dernier qui devient alors passant.

Le premier et/ou le deuxième condensateur(s) C1, C2 peuvent alors se décharger dans le circuit primaire P1, P2 du transformateur TX1, TX2 correspondant. Le transformateur TX1, TX2, assume alors sa fonction classique d'amplificateur de tension, permettant ainsi d'obtenir, aux bornes du circuit secondaire S1, S1', S2 une tension d'amplitude supérieure, en valeur absolue, à la tension aux bornes du circuit primaire P1, P2.

Le circuit secondaire S1, S1', S2 du transformateur TX1, TX2 génère alors une impulsion de tension et les électrodes de déclenchement 5, 6 sont simultanément soumises au même potentiel, provoquant une étincelle entre les électrodes principales 11, 12 et amorçant ainsi simultanément les éclateurs E1, E2 principaux.

De cette façon, le courant de foudre peut se répartir entre les deux éclateurs E1, E2 principaux qui, ainsi associés, présentent donc des caractéristiques supérieures à un éclateur seul. De même, le courant de suite, réparti entre les deux éclateurs E1, E2 principaux, pourra plus facilement être éteint.

### POSSIBILITE D'APPLICATION INDUSTRIELLE

L'invention trouve son application industrielle dans la fabrication de dispositifs de protection contre les surtensions transitoires.

## Revendications

1. Dispositif de protection contre les surtensions, du genre parafoudre à éclateur, comportant :
- un premier éclateur (E1),
- un premier système de pré-déclenchement (2), relié électriquement au premier éclateur (E1), de manière à permettre l'amorçage de ce dernier,
- un dispositif de commande (4), relié électriquement au premier système de pré-déclenchement (2) de manière à l'activer,
**caractérisé en ce qu'**il comporte au moins un deuxième éclateur (E2), monté en parallèle avec le premier éclateur (E1), et relié électriquement à un deuxième système de pré-déclenchement (3), monté en parallèle avec le premier système de pré-déclenchement (2), de telle sorte que le dispositif de commande (4) active simultanément le premier et le deuxième systèmes de pré-déclenchement (2, 3), de manière à déclencher simultanément le premier et le deuxième éclateurs (E1, E2).

2. Dispositif selon la revendication 1 **caractérisé en ce que** chaque système de pré-déclenchement (2, 3) est formé par une électrode de déclenchement (5, 6).

3. Dispositif selon la revendication 1 **caractérisé en ce que** chaque système de pré-déclenchement (2, 3) est formé par un système qui comporte une électrode de déclenchement (5, 6), ainsi qu'un circuit secondaire (S1, S1') d'un transformateur (TX1).

4. Dispositif selon la revendication 1 **caractérisé en ce que** chaque système de pré-déclenchement (2, 3) est un système électronique qui comporte une électrode de déclenchement (5, 6), ainsi qu'un transformateur (TX1, TX2).

5. Dispositif selon la revendication 2, 3 ou 4 **caractérisé en ce que** chaque électrode de déclenchement (5, 6) est reliée électriquement au circuit secondaire (S1, S1', S2) d'un transformateur (TX1, TX2) associé.

6. Dispositif selon la revendication 4 ou 5 **caractérisé en ce que** les circuits primaires (P1, P2) des transformateurs (TX1, TX2), correspondant respectivement au premier et au deuxième systèmes de pré-déclenchement (2, 3), sont montés en parallèle.

7. Dispositif selon l'une des revendications 4 à 6 **caractérisé en ce que** les circuits primaires (P1, P2) des transformateurs (TX1, TX2) sont reliés électriquement à la sortie (s) du dispositif de commande (4).

8. Dispositif selon l'une des revendications 3 à 7 **caractérisé en ce que** le circuit primaire (P1, P2) de chaque transformateur (TX1, TX2) est relié électriquement à un condensateur (C1, C2), dont la charge est commandée par le dispositif de commande (4).

9. Dispositif selon la revendication 8 **caractérisé en ce qu'**il comporte un troisième éclateur (E3), monté en parallèle avec le condensateur (C1, C2), de telle sorte que lorsque la tension aux bornes du condensateur (C1, C2) atteint la valeur seuil de déclenchement dudit troisième éclateur (E3), ce dernier court-circuite le condensateur (C1, C2) qui se décharge alors dans le circuit primaire (P1, P2) du transformateur (TX1, TX2).

10. Dispositif selon la revendication 9 **caractérisé en ce qu'**il comporte un premier et un deuxième condensateurs (C1, C2), montés en parallèle avec le troisième éclateur (E3) et chacun reliés électriquement au circuit primaire (P1, P2) d'un transformateur (TX1, TX2) associé.

11. Dispositif selon l'une des revendications 1 à 10 **caractérisé en ce que** le dispositif de commande (4) est sensible à la tension.

12. Dispositif selon la revendication 11 **caractérisé en ce que** le dispositif de commande est composé de fusibles (7), de varistances (8) et d'éclateurs (9).

## Patentansprüche

1. Vorrichtung zum Schutz vor Überspannungen des Typs Überspannungsableiter mit Funkenstrecke, die Folgendes umfasst:
- eine erste Funkenstrecke (E1),
- ein erstes Vorauslösesystem (2), das elektrisch mit der ersten Funkenstrecke (E1) verbunden ist, derart, dass der Überschlag dieser letzteren ermöglicht wird,
- eine Steuereinrichtung (4), die derart elektrisch mit dem ersten Vorauslösesystem (2) verbunden ist, dass sie es aktiviert,
**dadurch gekennzeichnet, dass** sie mindestens eine zweite Funkenstrecke (E2) umfasst, die mit der ersten Funkenstrecke (E1) parallel geschaltet und elektrisch mit einem zweiten Vorauslösesystem (3) verbunden ist, das mit dem ersten Vorauslösesystem (2) parallel geschaltet ist, derart, dass die Steuereinrichtung (4) das erste und das zweite Vorauslösesystem (2, 3) gleichzeitig aktiviert, derart, dass die erste und die zweite Funkenstrecke (E1, E2) gleichzeitig ausgelöst werden.

2. Vorrichtung nach Anspruch 1, **dadurch gekennzeichnet, dass** jedes Vorauslösesystem (2, 3) durch eine Auslöseelektrode (5, 6) gebildet ist.

3. Vorrichtung nach Anspruch 1, **dadurch gekennzeichnet, dass** jedes Vorauslösesystem (2, 3) durch ein System gebildet ist, das eine Auslöseelektrode (5, 6) sowie einen Sekundärstromkreis (S1, S1') eines Transformators (TX1) umfasst.

4. Vorrichtung nach Anspruch 1, **dadurch gekennzeichnet**, das jedes Vorauslösesystem (2, 3) ein elektronisches System ist, das eine Auslöseelektrode (5, 6) sowie einen Transformator (TX1, TX2) umfasst.

5. Vorrichtung nach Anspruch 2, 3 oder 4, **dadurch gekennzeichnet, dass** jede Auslöseelektrode (5, 6) elektrisch mit dem Sekundärstromkreis (S1, S1', S2) eines zugehörigen Transformators (TX1, TX2) verbunden ist.

6. Vorrichtung nach Anspruch 4 oder 5, **dadurch gekennzeichnet, dass** die Primärstromkreise (P1, P2) der Transformatoren (TX1, TX2), die dem ersten beziehungsweise dem zweiten Vorauslösesystem (2, 3) entsprechen, parallel geschaltet sind.

7. Vorrichtung nach einem der Ansprüche 4 bis 6, **dadurch gekennzeichnet, dass** die Primärstromkreise (P1, P2) der Transformatoren (TX1, TX2) elektrisch mit dem Ausgang (s) der Steuereinrichtung (4) verbunden sind.

8. Vorrichtung nach einem der Ansprüche 3 bis 7, **dadurch gekennzeichnet, dass** der Primärstromkreis (P1, P2) jedes Transformators (TX1, TX2) elektrisch mit einem Kondensator (C1, C2) verbunden ist, dessen Ladung durch die Steuereinrichtung (4) gesteuert wird.

9. Vorrichtung nach Anspruch 8, **dadurch gekennzeichnet, dass** sie eine dritte Funkenstrecke (E3) umfasst, die mit dem Kondensator (C1, C2) parallel geschaltet ist, derart, dass wenn die Spannung an den Klemmen des Kondensators (C1, C2) den Auslösungsschwellenwert der dritten Funkenstrecke (E3) erreicht, diese letztere den Kondensator (C1, C2) kurzschließt, der sich dann in den Primärstromkreis (P1, P2) des Transformators (TX1, TX2) entlädt.

10. Vorrichtung nach Anspruch 9, **dadurch gekennzeichnet, dass** sie einen ersten und einen zweiten Kondensator (C1, C2) umfasst, die mit der dritten Funkenstrecke (E3) parallel geschaltet sind und jeweils elektrisch mit dem Primärstromkreis (P1, P2) eines zugehörigen Transformators (TX1, TX2) verbunden sind.

11. Vorrichtung nach einem der Ansprüche 1 bis 10, **dadurch gekennzeichnet, dass** die Steuereinrichtung (4) spannungsempfindlich ist.

12. Vorrichtung nach Anspruch 11, **dadurch gekennzeichnet, dass** die Steuereinrichtung aus Sicherungen (7), Varistoren (8) und Funkenstrecken (9) besteht.

## Claims

1. A surge protector device of the spark gap lightning arrestor kind, the device comprising:
- a first spark gap (E1),
- a first pre-triggering system (2), electrically connected to the first spark gap (E1), so as to allow the breakdown of the latter,
- a control device (4), electrically connected to the first pre-triggering system (2) so as to activate it,
**characterized in that** it comprises at least a second spark gap (E2), connected in parallel with the first spark gap (E1), and electrically connected to a second pre-triggering system (3), mounted in parallel with the first pre-triggering system (2), so that the control device (4) simultaneously activates the first and second pre-triggering systems (2, 3) so as to simultaneously trigger the first and second gaps (E1, E2).

2. The device according to claim 1 **characterized in that** each pre-triggering system (2, 3) is formed by a trigger electrode (5, 6).

3. The device according to claim 1 **characterized in that** each pre-triggering system (2, 3) is formed by a system which comprises a triggering electrode (5, 6) and a secondary circuit (S1, S1') of a transformer (TX1).

4. The device according to claim 1 **characterized in that** each pre-triggering system (2, 3) is an electronic system that includes a trigger electrode (5, 6) and a transformer (TX1, TX2).

5. The device according to claim 2, 3 or 4 **characterized in that** each trigger electrode (5, 6) is electrically connected to the secondary circuit (S1, S1', S2) of an associated transformer (TX1, TX2).

6. The device according to claim 4 or 5 **characterized in that** the primary circuit (P1, P2) of the transformers (TX1, TX2), corresponding respectively to the first and second pre-triggering systems (2, 3) are connected in parallel.

7. The device according to one of claims 4 to 6 **characterized in that** the primary circuit (P1, P2) of the transformers (TX1, TX2) are electrically connected to the output(s) of the control device (4).

8. The device according to one of claims 3 to 7 **characterized in that** the primary circuit (P1, P2) of each transformer (TX1, TX2) is electrically connected to a capacitor (C1, C2), whose charge is controlled by the control device (4).

9. The device according to claim 8 **characterized in that** it comprises a third spark gap (E3), connected in parallel with the capacitor (C1, C2), such that when the voltage across the capacitor (C1, C2) reaches the trigger threshold value of said third spark gap (E3), this latter short-circuits the capacitor (C1, C2) which then discharges into the primary circuit (P1, P2) of the transformer (TX1, TX2).

10. The device according to claim 9 **characterized in that** it comprises first and second capacitors (C1, C2) connected in parallel with the third spark gap (E3) and each electrically connected to the primary circuit (P1, P2) of an associated transformer (TX1, TX2).

11. The device according to one of claims 1 to 10 **characterized in that** the control device (4) is responsive to voltage.

12. The device according to claim 11 **characterized in that** the control device is composed of fuses (7), varistors (8) and spark gaps (9).
